# EUROPÄISCHE PATENTANMELDUNG

(11) **EP 0 962 359 A2**
(43) Veröffentlichungstag der Anmeldung: **08.12.1999**
(21) Anmeldenummer: 99250174.2
(22) Anmeldetag: 03.06.1999
(51) Int. Cl.: B60R 1/00, B60R 11/04, B60R 25/00

(54) **Multifunktionales, ins Fahrzeug intergriertes, optisches Aufzeichningsgerät für andere Fahrzeuge, für den Zustand unmittelbar nach einem Unfall und für in das Fahrzeug einbrechende Personen**

(30) Priorität: 04.06.1998 DE 19824855
(71) Anmelder: Jörns, Klaus-Peter Prof.Dr., 14109 Berlin (DE)
(72) Erfinder: Jörns, Klaus-Peter Prof.Dr., 14109 Berlin (DE)

(57) **Zusammenfassung**

Multifunktionale Vorrichtung, um aus dem Inneren des eigenen Fahrzeugs heraus mithilfe einundderselben Kamera verkehrswidrig dicht auffallrende andere Fahrzeuge oder die Situation vor dem Fahrzeug in Verbindung mit dem eigenen Fahrzeugstatus (a), die Situation nach einem Kollisionsunfall im Fahrzeug und rund um das Fahrzeug herum (b) sowie in das parkende Fahrzeug einbrechende Personen (c) optisch dokumentieren zu können.

Zwar gibt es Vorrichtungen, die aus dem Fahrzeuginneren heraus mithilfe von Kameras unter spezifischen Gesichtspunkten ausgewählte Zielobjekte dokumentieren und dabei auch den Fahrzeugstatus einblenden können. Aber keine eignet sich zugleich für die unter a) bis c) genannten Zielsetzungen. Aufgabe der Erfindung ist es, eine solche multifunktionale Kamera zu schaffen, um zur Lösung der drei Aufgaben nur ein Gerät einbauen zu müssen.

Die vorgeschlagene Lösung bündelt die genannten drei Funktionen in einer verdeckt installierten, ausfahrbaren, voll drehbaren Kamera und sorgt dafür, daß die jeweils benötigte Funktion automatisch aktiviert wird und daß dabei gewonnene Daten mit dem eigenen Fahrzeugstatus abgeglichen und in die Dokumentation mit eingeblendet werden.

## Beschreibung

Multifunktionales optisches Überwachungs- und Aufzeichniingsgerät, das verdeckt im Fahrzeugheck eingebaut ist, für die Dokumentation a) von verkehrswidrig dicht auffahrenden Fahrzeugen oder der Situation vor dem eigenen Fahrzeug, b) vom Zustand innerhalb und außerhalb des Fahrzeugs unmittelbar nach einem Kollisionsunfall sowie c) von in das parkende Fahrzeug einbrechenden Personen.

Vorrichtung und Verfahren, um mit einunddemselben optischen Gerät, das mit einem Datenspeicher verbunden ist und dessen Funktionen vorzugsweise automatisch durch Sensoren rechnerunterstützt ausgewählt und geschaltet werden, aus dem Inneren des eigenen Fahrzeugs heraus sowohl sich verkehrswidrig verhaltende andere Fahrzeuge in Verbindung mit dem eigenen Fahrzeugstatus (a), die Situation im Fahrzeug und rund um das Fahrzeug herum nach einem Kollisionsunfall während der Fahrt oder im parkenden Zustand (b) als auch in das parkende Fahrzeug einbrechende Personen (c) optisch dokumentieren und so die Verkehrs- und Rechtssicherheit erhöhen zu können.

Der Stand der Technik kennt mehrere Vorrichtungen, allen voran EP 0 550 397 A1 und AT 001 011 U1, die aus dem Fahrzeuginneren heraus mithilfe von Kameras und / oder zusätzlichen Aufzeichnungsgeräten unter spezifischen Gesichtspunkten ausgewählte Zielobjekte optisch dokumentieren. Einige sehen darüber hinaus die Möglichkeit vor, in die optische Dokumentation den im Moment der Aufnahme herrschenden eigenen Fahrzeugstatus (Geschwindigkeit, Betätigung von Steuerungselementen wie Fahrtrichtungsanzeiger und Bremsen, oder Beschleunigungswerte) einzublenden. Dabei geht es zumeist darum, gerichtlich verwertbare Daten zur Verfügung zu haben, wenn es zu einer Verkehrsgefährdung oder zu einem Unfall gekommenen ist.

OS DE 40 16 570 A1 wurde insbesondere fiir die polizeiliche Dokumentation des Verhaltens verfolgter Fahrzeuge entwickelt, OS DE 37 34 066 A1 und OS DE 35 42 697 A1 sowie DE 85 33 991 U1 für die Dokumentation von Auffahrunfällen aus dem eigenen Fahrzeug heraus, wobei DE 37 34 066 A1 den Bereich vor dem Fahrzeug, DE 35 42 697 A1 zusätzlich auch den Bereich hinter dem eigenen Fahrzeug mit erfaßt. AT 001 011 U1 zeigt darüber hinaus die Besonderheit, daß die vorgesehene Kamera vollständig drehbar angeordnet ist.

OS DE 44 20 560 A1 sieht die Kamera in einem definierten Winkel angebracht vor, der dem Hauptgefährdungsbereich eines Linienbusses beim Einfädeln in den Verkehr an Haltestellen zugewandt ist, und OS DE 42 35 046 A1 sieht mehrere, paarweise angeordnete Aufzeichnungsgeräte vor, um stereografische, auf Distanzen hin ablesbare Aufzeichnungen von Unfällen vornehmen zu können. DE 93 13 535 U1 sieht für eine ähnliche Einrichtung die Steuerung durch Knopfdruck vor.

OS DE 38 38 365 A1 beschreibt ein Aufzeichnungsgerät, das im Fahrzeug Aufnahmen macht, um innerhalb oder mittels eines Fahrzeugs verübte Verbrechen fotografisch dokumentieren zu können; diese Schrift basiert auf JP 6 1 26 670-A, einer Vorrichtung, die dein Fahrer eines Fahrzeugs mittels einer fest installierten Kamera und eines Monitors im Armaturenbrett die Sicht nach hinten ermöglicht. Und DE 94 19 104 U1 beschreibt eine Videoüberwachungs- und aufzeichnungsanlage, die das Fahrzeuginnere entweder durch das Öffnen einer Tür, manuell oder durch spezielle Kontakte in den Sitzen ausgelöst, aufgezeichnet werden läßt.

Die bislang vielfältigsten Verwendungsmöglichkeiten einer im Fahrzeug installierten optischen Aufzeichnungsanlage zur Unfallrekonstruktion beschreibt EP 0 550 397 A1, das an der Vorder- und Rückseite eines Kraftfahrzeuges Aufnahmegeräte installiert und die Aufnahmen mit den Daten des Fahrzeugstatus über einen Bordcomputer verbindet sowie über einen Monitor zu visualisieren vermag. Dabei ist vorgesehen, daß die Kameras, etwa von der Lenkung gesteuert, schwenkbar eingebaut sind, um jeweils den richtigen Winkel auf den vorausfahrenden Verkehr zu erfassen. Die Kleinstkameras können an den Stoßstangen oder hinter der Windschutzscheibe in Verbindung mit dem Rückspiegel installiert und auf unterschiedliche Weise ausgelöst werden.

Der Stand der Technik ist trotz der vielen vorgeschlagenen Einrichtungen unbefriedigend, weil die genannten Einrichtungen in ihren Zweckbestimmungen zu speziell sind, um sowohl den Aufgaben einer gerichtlich verwendbaren Datensicherung bei Gefährdung (a) und Unfall (b) als auch dem Schutz vor Einbrüchen und Diebstählen (c) zu dienen. So sind diejenigen, die die genannten drei Sicherungs- bzw. Dokumentationseinrichtungen einbauen wollen, dazu genötigt, mehrere Geräte ins Fahrzeug einzubauen. Das ist nicht nur sehr kostenaufwendig, sondern nimmt auch viel Raum weg und erfordert einen hohen Bedienungsaufwand. Nicht zuletzt wegen dieser Nachteile sind solche Aufzeichnungsgeräte auch nicht in die Serienproduktion gegangen. Der mögliche Gewinn an Verkehrs- und Rechtssicherheit sowie an Schutz von Leben und Sachwerten bleibt ungenutzt.

Aufgabe der vorgeschlagenen Vorrichtung ist es nun, ein optisches Aufnahme- und Aufzeichnungsgerät, im folgenden Kamera genannt, zu schaffen, das es erlaubt, gerichtlich verwertbare Daten sowohl bei einer Gefährdung durch nachfolgende und vorausfahrende Fahrzeuge, nach einem Kollisionsunfall, und zwar sowohl während der Fahrt wie im Parkzustand, als auch bei einem Einbruch(sversuch) ins parkende Fahrzeug selbsttätig aufzunehmen und zu speichern und in die Dokumentation Daten des eigenen Fahrzeugstatus einzublenden. Dabei muß die Kamera auch selbsttätig erkennen können, daß eine Gefährdung durch nachfolgende Fahrzeuge, durch Kollisionsunfall bzw. durch Einbruch vorliegt, und automatisch Aufnahmen machen können, um die Aufmerksamkeit der das Fahrzeug lenkenden Person nicht durch Hebelbedienung oder Betrachtung eines Monitors zusätzlich zu beanspruchen bzw. auch dann funktionsfähig zu sein, wenn das Fahrzeug führerlos parkt. Bestimmte Teilfunktionen müssen, vorzugsweise zur Dokumentation der Situation vor dem Fahrzeug, auch manuell steuerbar sein.

Diese Aufgabe wird durch eine Vorrichtung mit den Merkmalen des Anspruchs 1 gelöst.

Die vorgeschlagene Lösung vermag drei wichtige Ziele der Bemühungen um ein Mehr an Schutz von Leben und Sachwerten sowie an Verkehrs- und Rechtssicherheit mithilfe einundderselben Vorrichtung zu erreichen. Das gelingt im wesentlichen dadurch, daß die vorgesehene Kamera um 360° drehbar installiert ist und bei der Ausführung seiner einzelnen Funktionen in die optischen Dokumente Daten einzublenden vermag, die mittels Kameratechnik und mittels dazu spezifisch angeordneter und koordinierter Sensoren gewonnen und computerverarbeitet werden. Dadurch wird es möglich, daß die Kamera auch selbsttätig erkennen kann, wann ein nachfolgendes Fahrzeug, gemessen an der gefahrenen eigenen Geschwindigkeit und den durch die StVO festgesetzten Mindestabständen, dem eigenen Fahrzeug verkehrswidrig nahe gekommen ist.

Die Erfindung macht es weit wahrscheinlicher als bisher, daß Fahrzeughersteller und / oder Fahrzeugllalter ein optisches Aufnahme- und Aufzeichnungsgerät in Kraftfahrzeuge einbauen werden, da sie nur eine einzige computerunterstützte Kamera anschaffen und installieren müssen. Und da in der Lösung die bekannten Techniken von Autofocus- und digitalen Kameras sowie von sogenannten "Unfalldatenschreibern" bzw. "Eimerkettenspeichern" genutzt werden können, bleiben die Kosten bei großem Effekt trotzdem verhältnismäßig niedrig.

Es ist davon auszugehen, daß künftig manche Verkehrsgefährdung - zB durch zu dichtes Auffahren - unterbleiben wird, wenn Fahrzeugführer davon ausgehen müssen, daß in das vor ihnen fahrende Fahrzeug ein Aufzeichnitngsgerät integriert ist, das den Abstand, das eigene Fahrzeug einschließlich polizeilichem Kennzeichen und sie selbst als die das Fahrzeug lenkende Person optisch zweifelsfrei zu dokumentieren vermag. Die fotografische Dokumentation der Situation nach einem Kollisionsunfall liefert wichtige medizinische und rechtliche Erkenntnisse. Und schließlich könnten Einbrecher vor einem Einbruch zurückschrecken, wenn sie davon ausgehen müßten, daß ein optisches Aufzeichnungsgerät die einbrechende Person optisch dokumentieren kann. In allen Fällen würde ein erheblicher Zugewinn an persönlichem Schutz sowie an Rechts- und Verkehrssicherheit zu verzeichnen sein.

Ist das Aufzeichnungsgerät auch noch in einem Kasten verdeckt angebracht und durch ein automatisches Schloß gesichert, bleibt es in begrenztem Umfang auch gegen Entwendung geschützt.

Ausführungsbeispiele sind in den Zeichnungen dargestellt und werden im folgenden näher beschrieben. Es zeigen
Figur 1: die drehbare Kamera im Fond eines Fahrzeuges im abgesenkten Zustand (Seitenansicht);
Figur 2: die drehbare Kamera im aufnahmebereiten Zustand mit rückwärts gewandtem Objektiv (Seitenansicht);
Figur 3: die drehbare Kamera im aufnahmebereiten Zustand mit nach vorn gewandtem Objektiv (Seitenansicht);

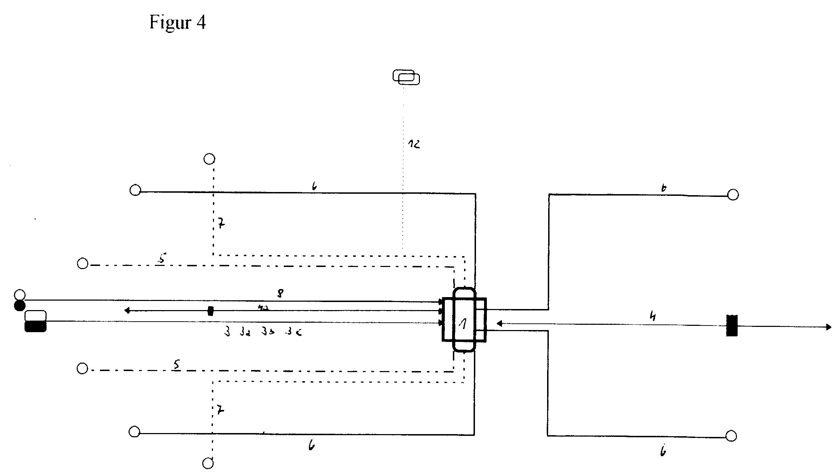

Figur 4: eine schematische Darstellung der Vernetzung der Kamera mit den fiir die Ausfiihrung ihrer Funktionen wichtigen Daten gebern (Sensoren) und Datenübermittlungsleitungen; der datenverarbeitende Rechner wird hier als in die Kamera integriert angenommen;
Figur 5: die drehbare Kamera im heruntergeklappten, verdeckten Zustand.

### Zur Funktion a).

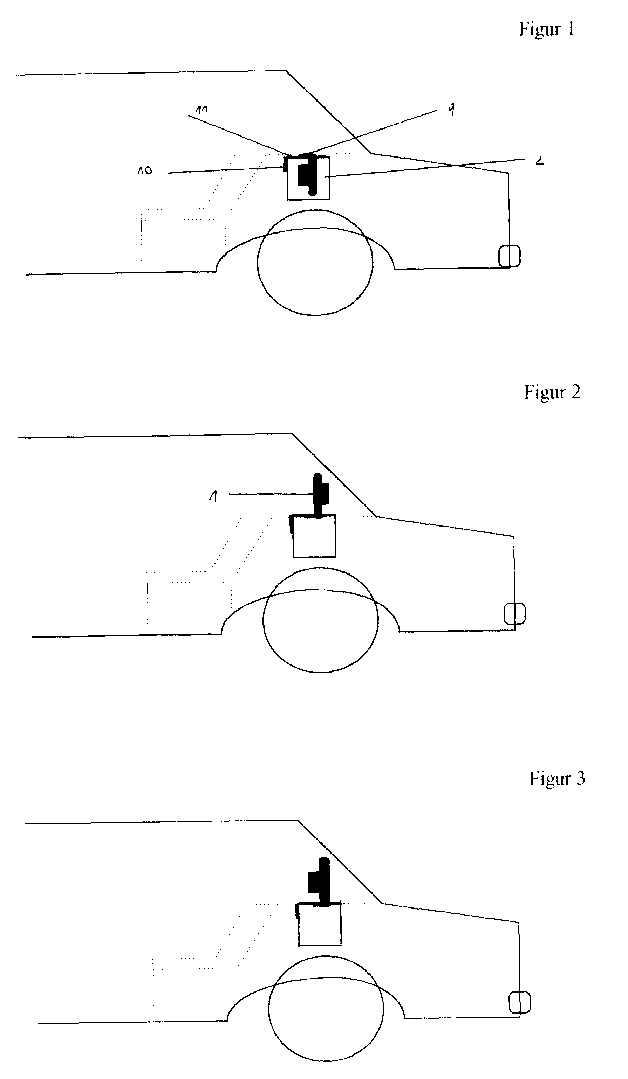

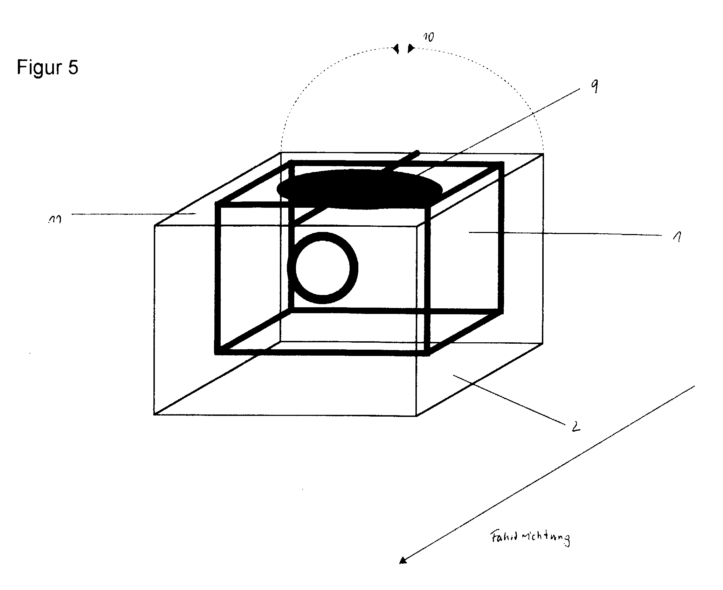

Im Fond eines Kfz ist in einem in die Heckablage eingebauten Kasten 2 an der Innenseite des Kastendeckels (Figur 5) eine Autofocus-Kamera 1 auf einem flachen Elektromotor installiert, der sie um 360° zu drehen vermag. Beim geparkten und verriegelten Kfz weist die Kamera, nach unten geklappt, mit ihrem Objektiv in Fahrtrichtung (Figur 1 und 5). Durch die Entriegelung des Fahrzeugs und das Einlegen eines vorwärts gerichteten Ganges wird die Kamera, impulsgesteuert 8, mithilfe eines Elektromotors 9 um 180° in Richtung auf den nachfolgenden Verkehr gedreht, bleibt aber im sie bergenden Kasten verdeckt unterhalb der Ablage. Die Kamera ist verbunden mit Sensoren 5, die wichtige Daten über den eigenen Fahrzeugstatus der Kamera zuführen. Sie ist außerdem mit einer - vorzugsweise in Infrarot-Technik gehaltenen - im Heck des Fahrzeugs installierten Meßeinrichtung 4 verbunden, die während der Fahrt oberhalb einer beliebig einstellbaren Grundgeschwindigkeit des eigenen Fahrzeugs beständig den Abstand zum nächstnachfolgenden Fahrzeug mißt. Die dabei gewonnenen Daten werden rechnerunterstützt mit der eigenen Fahrgeschwindigkeit und dem Status der Bremsen abgeglichen. Wird bei nicht betätigten Bremsen der Abstand durch das nachfolgende Fahrzeug über jene Grenze hinaus unterschritten, die die StVO als Mindestabstand zum vorausfahrenden Kfz festlegt - wobei ein einstellbarer prozentualer Toleranzwert hinzugerechnet werden kann -, aktiviert der Rechner automatisch die Kamera, indem er sie hochklappt und zumindest eine Aufnahme digital fertigt, die das nachfolgende Fahrzeug in Frontaufnahme dokumentiert, dabei aber die Abstandsmessung, die Toleranzzugabe und den Status der eigenen Geschwindigkeit und der Bremstätigkeit mit einblendet. Die Einblendung des Bremstätigkeitsstatus soll verhindern, daß die Einrichtung durch sogenanntes "Ausbremsen" nachfolgender Fahrzeuge mißbraucht wird.

In Situationen, in denen sich die das Kfz lenkende Person durch ein vorausfahrendes Fahrzeug gefährdet fühlt oder aus anderen Gründen die Situation vor, hinter oder neben dem Fahrzeug optisch dokumentieren will, kann die Kamera, durch elektrischen Impuls 3, auch manuell mithilfe eines entsprechenden Schalters am Armaturenbrett zur Aufnahme in der gewünschten Richtung aktiviert, unter Zuhilfenahme des Elektromotors 10 aus dem Kasten durch Drehung des Kastendeckels um die in Fahrtrichtung angeordnete, in der Deckelmitte verlaufende Achse 11 um 180° herausgeklappt (Figur 6) und in Fahrtrichtung, nach rückwärts oder in einem anderen Winkel zur Dokumentation veranlaßt werden (Figur 2), und zwar je nach verwendetem Kameratyp für Einzel- oder Serienaufnahmen. Durch einen wieder anderen manuellen elektrischen Impuls 3b wird die Kamera nach erfolgter Aufnahme wieder in den Kasten abgesenkt. Bei nunmehr wieder verschlossenem Kasten ist die Kamera unsichtbar. Bei Kombifahrzeugen ohne Heckablage kann der Kasten samt der Aufnahmetechnik seitlich an einem Karosserieholm oder an der Innenseite der Hecktür befestigt werden.
Durch manuellen Steuerimpuls 3c kann die Kamera auch in Fahrtrichtung positioniert werden und vorausfahrende Fahrzeuge nach demselben Verfahren dokumentieren.
Es empfiehlt sich, Kameras mit Digital-Technik zu verwenden, da bei ihnen die Einblendung von Daten mit einundderselben Technik bewerkstelligt werden kann. Kann die Kamera die eigenen und die ihr zugeleiteten Meßdaten nicht selbständig koordinieren, sind datenverarbeitende Zusatzgeräte erforderlich, die diese Arbeit übernehmen.

Durch die aufgenommenen und gespeicherten Daten kann die Gefährdung vor allem durch ein nachfolgendes Fahrzeug dokumentiert werden, wobei Fahrzeugtyp, polizeiliches Kennzeichen und die das Fahrzeug lenkende Person als gerichtsverwertbare Daten mit gespeichert werden.

### Zur Funktion b):

Das Aufnahmegerät ist durch Sensoren 6 mit den Knautschzonen am vorderen und hinteren Fahrzeug sowie in den Türen verbunden. Kommt es zu einer Kollision mit einem anderen Fahrzeug, bei der Stoßstangen über eine bestimmbare Toleranzgrenze hinaus gegenüber der übrigen Karosserie verschoben oder Sicherheitseinrichtungen in den Türen deformiert werden, wird die Kamera automatisch hochgeklappt, macht bei einer Gesamtdrehung um 360° zumindest vier Aufnahmen (nach vorn, rechts, hinten und links) und senkt sich dann wieder von selbst in den Kasten ab. Es ist möglich, die Zahl der Aufnahmen durch eine programmierte Verkleinerung des Drehwinkels zu erhöhen. In die Aufnahmen wird der Fahrzeugstatus über die Datenleitung 5 eingeblendet.
Auch beim parkenden Fahrzeug bleiben die genannten Sensoren in Bereitschaft, jedenfalls so lange das Fahrzeug an eine Stromquelle angeschlossen ist. Dadurch ist es möglich, auch bei Kollisionen, die das parkende Fahrzeug erleidet, automatisch und ohne Mitwirkung eines Fahrzeugführers die unfalldokumentierende Fähigkeit der Vorrichtung zu nutzen.
Die gewonnenen Daten sagen Wichtiges über die Situation aus, wie sie sich nach einem Kollisionsunfall innerhalb des Fahrzeugs und um das Fahrzeug herum darstellt. Auch diese Daten können Wesentliches zur persönlichen Sicherheit und zur Rechtssicherheit beitragen.

### Zu Funktion c):

Die beim parkenden und zentralverriegelten Fahrzeug in Fahrtrichtung weisende, in den Kasten abgesenkte Kamera ist durch Sensoren 7 mit der Wegfahrsperre, der Zentralverriegelung und den Türschlössern des Fahrzeugs verbunden. Wird von außen versucht, trotz aktivierter Wegfahrsperre und eingeschalteter Zentralverriegelung ins Fahrzeug einzudringen, und gelingt es, wenigstens eine Tür zu öffnen, löst der entsprechende Sensor die Kamera aus, indem er sie hochklappen und zumindest eine Aufnahme vom Fahrzeuginneren machen läßt. Nach erfolgter Aufnahme senkt sich die Kamera wieder selbsttätig in ihren Kasten ab (Zustand wie in Figur 1) und bleibt dort gegen eine gewaltsame Entfernung relativ gut geschützt. Je stabiler das Material des Kastens ist, desto größer ist sein Schutzeffekt.
Die genannte Funktion kann auch durch einen mit der Kamera elektronisch verbundenen Bewegungsmelder ausgelöst werden, der durch das Arretieren der Wegfahrsperre und der Zentralverriegelung funktionsbereit gemacht wird.

Mit den aufgenommenen und gespeicherten Daten stehen wichtige Hinweise fiir eine spätere Verfolgung der Täter zur Verfügung. Der abschreckende Effekt wird erhöht, wenn die Auslösung der Aufnahme mit einem akustischen und / oder optischen Alarmsignal 12 verbunden wird. Gleichzeitig sorgt der verdeckte Einbau dafür, daß potentielle Straftäter nicht vorzeitig gewarnt werden.

### Zeichenerklärung:

1 Optisches Aufnahme-und Aufzeichnungsgerät, rechnerunterstützt (Kamera)
2 Kasten, in den die Kamera abgesenkt wird
3 Schaltleitung, um die Kamera manuell in rückwärtiger Richtung aufnahmebereit zu machen
3a Schaltleitung, um die Kamera manuell auszulösen
3b Schaltleitung, um die Kamera in ihre Ausgangsposition zurückzuführen
4 Mithilfe von Infrarot-Technik bewerkstelligte Abstandsmessung zu einem nachfolgenden Fahrzeug und Übertragungsleitung zur Kamera
4a Mithilfe von Infrarot-Technik bewerkstelligte Abstandsmessung zu einem vorausfahrenden Fahrzeug und Übertragungsleitung zur Kamera
5 Datenübertragungsleitung bzgl. eigener Geschwindigkeit, Betätigung der Bremsen und der Fahrtrichtungsanzeiger (Unfalldatenschreiber)
6 Datenübertragungsleitung von Sensoren aus den Knautschzonen
7 Datenübertragungsleitung von Sensoren aus den Türrahmen
8 Datenübertragungsleitung von der Zündschloß- und Verriegelungsanlage 9 Elektromotor zur Drehung der Kamera um 360°
10 Elektromotor zum Absenken der Kamera um 180° in den Kasten 2 und zum Heraufklappen der Kamera in einen aufnahmebereiten Zustand
11 Kastendeckel
12 Alarmanlage

## Patentansprüche

1. Multifunktionales optisches Überwachungs- und Aufzeichnungsgerät (im folgenden Kamera), das vorzugsweise verdeckt in der Ablage im Fahrzeugfond eingebaut ist und dessen Funktionen vorzugsweise automatisch ausgelöst werden für die gerichtsverwertbare Dokumentation entweder a) von verkehrswidrig dicht auffahrenden nachfolgenden Fahrzeugen sowie von der Situation vor dem Fahrzeug, oder b) vom Zustand unmittelbar nach einem Kollisionsunfall während der Fahrt oder im parkenden Zustand oder c) von in das parkende Fahrzeug einbrechenden Personen, und zwar jeweils verbunden mit wichtigen Daten des eigenen Fahrzeugstatus,
**dadurch gekennzeichnet,** daß eine mithilfe eines Elektromotors 9 um 360° drehbare Kamera 1 in der Ablage im Fond eines Kraftfahrzeuges, und zwar ausklappbar 10 in einem eigenen, gegen Diebstahl absichernden Gehäuse 2, verdeckt installiert ist (Figuren 1-3.5), über Sensoren und andere Meßvorrichtungen vorzugsweise automatisch aktiviert wird und wichtige Daten über den eigenen Fahrzeugstatus, den Zustand wichtiger Teile der Karosserie, über nachfolgende und vorausfahrende Fahrzeuge und die sonstige Umgebung sowie im Falle eines Einbruchs über die einbrechende Person erhält (Figur 4), funktionsbedingt in einem digitalen Rechner zusammenführen und in der jeweils gewünschten Kombination dokumentieren kann und so in der Lage ist, die in a) - c) genannten drei Funktionen mit einem einzigen Gerät auszuführen; dabei geschieht die Funktionswahl und -aktivierung rechnerunterstützt automatisch durch jeweils eine Funktion aktvierende Sensorenimpulse, zu a) insbesondere wenn ein nachfolgendes Fahrzeug den vom eigenen Fahrzeug aus kontinuierlich mit Infrarotstrahlen gemessenen und mit dem eigenen Fahrzeugstatus digital abgeglichenen, gesetzlich vorgeschriebenen Mindestabstand deutlich unterschreitet, zu b) durch in die Karosserie integrierte, auf Verformungen reagierende Sensoren, und zu c) durch Sensoren, die einen Einbruch in das parkende, mit Wegfahrsperre und Türverriegelung gesicherte Fahrzeug wahrnehmen; in die Dokumentation werden Symbole eingeblendet, die zeigen, durch welche Sensoren die jeweiligen Aufnahmen augelöst worden sind.

2. Vorrichtung nach Anspruch 1,
**dadurch gekennzeichnet,** daß die Kamera 1 an der Innenseite des Deckels 11 eines Metallkastens 2 installiert ist, der in die Heckablage eines Pkw integriert ist, durch motorbetriebene 10 Drehung bzw. Kippung des Kastendeckels 11 um seine in Fahrtrichtung verlaufende Mittelachse um 180° in die Ebene oberhalb der Heckablage positioniert und aufnahmebereit gemacht wird, und zwar entweder automatisch durch digital am Fahrzeugstatus rückgekoppelte Abstandsmeßdaten oder durch manuell ausgelösten Steuerimpuls 3; dabei soll der Kastendeckel mit einem Schloß verbunden sein, das automatisch durch den Arretierungsimpuls geschlossen und durch den Impuls zum Ausklappen der Kamera geöffnet wird.

3. Vorrichtung nach Anspruch 2,
**dadurch gekennzeichnet**, daß der die Kamera 1 aufnehmende Kasten 2 bei Kombifahrzeugen seitlich an einem Karosserieholm oder an der Innenseite der Hecktür befestigt wird, wobei die mithilfe von Elekromotoren geschehenden Klapp- und Drehbewegungen so angeordnet sind, daß die genannten Funktionen a) bis c) erfüllt werden können.

4. Vorrichtung nach Anspruch 1,
**dadurch gekennzeichnet,** daß die Kamera 1 ohne den nach Anspruch 2 beschriebenen Kasten 2 um 360° motorbetrieben drehbar fest auf der Heckablage oder nach Anspruch 3 befestigt wird.

5. Vorrichtung nach Anspruch 1,
**dadurch gekennzeichnet**, daß die verwendete Kamera eine in Digital-Technik ausgeführte Autofocus-Kamera ist, die in der Lage ist, ihr durch Sensorimpulse zugeleitete Daten bezüglich des Abstands zu nachfolgenden oder vorausfahrenden Fahrzeugen, zur eigenen Geschwindigkeit und zum Status der Bremsen und Fahrtrichtungsanzeiger des eigenen Fahrzeugs computerunterstützt aufeinander abzustimmen und in die anzufertigenden Bilddokumente zu integrieren.

6. Vorrichtung nach Anspruch 1,
**dadurch gekennzeichnet,** daß die Kamera 1 eine Videokamera ist, die technisch auch den Ansprüchen 5 und 7 genügt; anstatt von Einzelfotos oder Fotoserien nimmt sie Bildsequenzen von programmierbarer Dauer auf.

7. Vorrichtung nach Anspruch 1,
**dadurch gekennzeichnet**, daß zusammen mit der Kamera 1 eine computerunterstützte Technik verwendet wird, die durch eigene, fortlaufend aus dem Heckbereich des eigenen Fahrzeugs, vorzugsweise mittels Infrarotstrahlen, geschehende Messung des Abstands zum nachfolgenden Fahrzeug 4 und durch einen gleichzeitigen Abgleich mit den Daten, die die vom eigenen Fahrzeug gefahrene Geschwindigkeit und den Status der Bremsen betreffen 5, in der Lage ist zu erkennen, wann ein nachfolgendes Fahrzeug eine zuvor programmierte prozentuale Toleranzgrenze für eine Unterschreitung des durch die StVO geforderten Mindestabstands objektiv erreicht hat, und die Kamera selbsttätig auszulösen.

8. Vorrichtung nach Anspruch 1,
**dadurch gekennzeichnet**, daß die Kamera durch manuellen Impuls in Fahrtrichtung geschwenkt und die Situation vor dem eigenen Fahrzeug aufgenommen werden kann, wobei die digitale Bilddokumentation auch Daten über den Abstand zum vorausfahrenden Fahrzeug, die durch einen im Frontbereich installierten, mittels Infrarotsrahlen arbeitenden Abstandsmesser 4a gewonnen werden, über die eigene Geschwindigkeit und über den Zustand der Bremsen enthalten soll.

9. Vorrichtung nach Anspruch 1,
**dadurch gekennzeichnet**, daß in den Knautschzonen des Fahrzeugs im Front- und Heckbereich sowie in den Türen Sensoren 6 eingebaut und mit der Kamera 1 rechnerunterstützt verbunden sind, die bei einem Kollisionsunfall während der Fahrt oder im Parkzustand aufgrund von Verwerfungen in der Karosserie die Kamera aufnahmebereit machen, auslösen und sie veranlassen, bei einer insgesamt durchgeführten Drehung um 360° zumindest bei den Teilwinkeln 0°, 90°, 180° und 270° Aufnahmen zu machen, die den Zustand im Inneren des Fahrzeugs und in seiner Umgebung zusammen dokumentieren.

10. Vorrichtung nach Anspruch 1,
**dadurch gekennzeichnet**, daß Sensoren an den Türschlössern des Fahrzeugs, an der Wegfahrsperre und an der Zentralverriegelung installiert und mit der Kamera verbunden sind 7, die in dem Fall, daß bei geparktem, durch Wegfahrsperre gesichertem und verriegeltem 8 Fahrzeug zumindest eine Tür gewaltsam geöffnet wird, die Kamera durch entsprechende Impulsgebung und rechnerunterstützte Schaltung in Fahrtrichtung aufnahmebereit machen, zumindest eine Innenaufnahme auslösen und die Kamera wieder in ihren Ausgangszustand zurückführen und dort arretieren.

11. Vorrichtung nach Anspruch 10,
**dadurch gekennzeichnet**, daß die in Anspruch 10 genannte Funktion der Kamera zur optischen Dokumentation einer in das Fahrzeug gewaltsam eindringenden Person dadurch ausgelöst wird, daß die Sensoren 7 mit einem Bewegungsmelder verbunden sind, der durch das Arretieren von Wegfahrsperre und Zentralverriegelung funktionsbereit geschaltet wird und bei entsprechenden Wahrnehmungen im Fahrzeuginneren einen Impuls an die Kamera weitergibt.

12. Vorrichtung nach Anspruch 9,
**dadurch gekennzeichnet,** daß die Sensoren zugleich mit dem Impuls für das Auslösen der Kamera eine Alannanlage im Fahrzeug 12 auslösen.
